# EUROPEAN PATENT APPLICATION

(11) **EP 4 382 645 A1**
(43) Date of publication of application: **12.06.2024**
(21) Application number: 22852757.8
(22) Date of filing: 30.06.2022
(51) Int. Cl.: D01F 6/62, B60C 9/00, C08J 11/24, C08J 11/26, F16L 11/02

(54) **CHEMICALLY-RECYCLED PET FIBERS, RUBBER-FIBER COMPOSITE, CONVEYOR BELT, HOSE AND TIRE**

(30) Priority: 05.08.2021 JP 2021129363
(71) Applicant: BRIDGESTONE CORPORATION, Chuo-ku Tokyo 104-8340 (JP)
(72) Inventor: FUJIE Masahiro, Tokyo 104-8340 (JP); SUGIMOTO Kenichi, Tokyo 104-8340 (JP)
(74) Representative: Marks & Clerk LLP
(86) International application number: PCT/JP2022/026410
(87) International publication number: WO 2023/013331

(57) **Abstract**

Provided is a chemically-recycled PET fiber with reduced degradation and superior strength and durability, and rubber-fiber composite products, such as tires, using the chemically-recycled PET fiber. The chemically-recycled PET fiber is made by polymerizing a raw material containing at least one of a monomer and an intermediate that are obtained by depolymerization of a PET product, the monomer including terephthalic acid (TPA) and/or dimethyl terephthalate (DMT) and the intermediate including bis(2-hydroxyethyl) terephthalate (BHET). The chemically-recycled PET fiber has a carboxyl end group (CEG) concentration of 15 eq/ton or less and a degree of crystallinity of 40% or more.

## Description

### TECHNICAL FIELD

The present disclosure relates to a chemically-recycled PET fiber, a rubber-fiber composite, a conveyor belt, a hose, and a tire.

### BACKGROUND

Today, polyesters are used in many products for human consumption, and one of the most widely known is polyethylene terephthalate, more widely known as PET, which is a saturated polyester derived from the reaction of terephthalic acid with ethylene glycol.

The consumption of PET has grown rapidly in recent years, and in particular, this compound is used in large quantities in the production of containers for various liquid products, such as bottled beverages.

PET is used for its light weight, high durability, and low gas permeability, and is particularly used widely in the production of beverage bottles due to not being not harmful to human health, among other characteristics. However, PET has high atmospheric and biological resistance and decomposes extremely slowly, which leads to environmental problems upon mass production.

Therefore, from the perspective of environmental issues and economic benefit, PET products have been recycled using a variety of technologies and methods.

For example, one known method is "material recycling" in which waste polymers are collected, purified, crushed into particles, and used as material for products that do not need to meet high standards for quality and purity. This form of recycling is limited, however, in its field of use.

Another type of technology for recycling PET products is a method called "chemical recycling", in which PET products are depolymerized and then re-polymerized. Chemical methods to depolymerize PET in this process include, for example, a hydrolysis method, a methanolysis method, and a glycolysis method.

For example, Patent Literature (PTL) 1 discloses technology for producing chemically-recycled PET, and using the PET as a reinforcing member in a tire, by depolymerizing PET waste into monomers and polymerizing the depolymerized monomers.

### CITATION LIST

### Patent Literature

PTL 1: EP 3753965 A1

### SUMMARY

### (Technical Problem)

PET recycled by technology such as in PTL 1, however, is problematic in that components (impurities) in the PET products used as recycled materials inhibit crystallization and facilitate degradation. Therefore, such PET is not sufficient for applications requiring strength and durability, such as tire cords, and further improvement is desired.

It is therefore an aim of the present disclosure to provide a chemically-recycled PET fiber with reduced degradation and excellent strength and durability. Another aim of the present disclosure is to provide a rubber-tire composite, a conveyor belt, a hose, and a tire with excellent strength and durability.

### (Solution to Problem)

We investigated how to resolve the aforementioned problem with regard to chemically-recycled PET fiber that is made by polymerizing a raw material that contains a monomer such as terephthalic acid (TPA) and dimethyl terephthalate (DMT) and an intermediate such as bis(2-hydroxyethyl) terephthalate (BHET), obtained by the depolymerization of a PET product. As a result, we discovered that the PET used as the raw material for chemical recycling contains impurities, which inhibit the crystallization of PET at the time of re-polymerization, resulting in the expansion of amorphous regions, and that moisture, free chemicals, and the like can easily enter these amorphous regions. When these PET materials are used as raw material, it is thought that the chemically-recycled PET fiber resulting from polymerization easily degrades. Examples of these impurities include isophthalic acid (IPA), diethylene glycol (DEG), and the like included in PET products that are the raw material, or components such as those indicated in Formulas (1) and (2) below in BHET oligomers. These impurities are extremely difficult to remove completely, however, for reasons such as unrefinability.

During further investigation, we focused on how the carboxyl end group (CEG) of the chemically-recycled PET fiber acts as a catalyst for the degradation reaction to accelerate the degradation reaction, and on the effect of CEG concentration on degradation. We discovered that even with a certain amount of impurities such as the above-described IPA, if the CEG concentration can be kept low and the degree of crystallinity of PET can be kept above a certain level, then the degradation of chemically-recycled PET fiber can be suppressed and excellent strength and durability can be achieved.

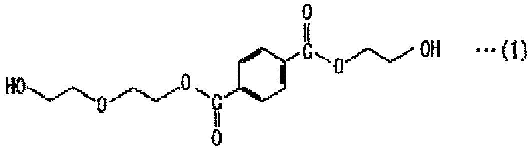

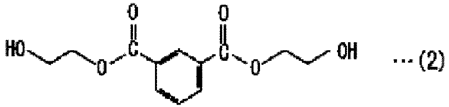

That is, a chemically-recycled PET fiber of the present disclosure is made by polymerizing a raw material containing at least one of a monomer and an intermediate that are obtained by depolymerization of a PET product, the monomer including terephthalic acid (TPA) and/or dimethyl terephthalate (DMT) and the intermediate including bis(2-hydroxyethyl) terephthalate (BHET), wherein the chemically-recycled PET fiber has a carboxyl end group (CEG) concentration of 15 eq/ton or less and a degree of crystallinity of 40% or more.

The aforementioned configuration can suppress degradation of chemically-recycled PET fibers and achieve excellent strength and durability.

A rubber-fiber composite of the present disclosure is made using the above-described chemically-recycled PET fiber of the present disclosure.

The aforementioned configuration can suppress degradation and achieve excellent strength and durability.

A conveyor belt of the present disclosure is made using the above-described chemically-recycled PET fiber of the present disclosure.

The aforementioned configuration can suppress degradation and achieve excellent strength and durability.

A hose of the present disclosure is made using the above-described chemically-recycled PET fiber of the present disclosure.

The aforementioned configuration can suppress degradation and achieve excellent strength and durability.

A tire of the present disclosure is made using the above-described chemically-recycled PET fiber of the present disclosure.

The aforementioned configuration can suppress degradation and achieve excellent strength and durability.

### (Advantageous Effect)

According to the present disclosure, a chemically-recycled PET fiber with reduced degradation and excellent strength and durability can be provided. A rubber-fiber composite, a conveyor belt, a hose, and a tire with excellent strength and durability can also be provided according to the present disclosure.

### DETAILED DESCRIPTION

Embodiments of the present disclosure are described below with specific examples.

### <Recycled PET fiber>

The chemically-recycled PET fiber of the present disclosure is a chemically-recycled PET fiber made by polymerizing a raw material containing at least one of a monomer and an intermediate that are obtained by depolymerization of a PET product, the monomer being terephthalic acid (TPA), dimethyl terephthalate (DMT), or the like, and the intermediate being bis(2-hydroxyethyl) terephthalate (BHET) or the like (including BHET oligomers).

The PET products to be recycled are plastic products made mainly of polyethylene terephthalate, such as PET bottles, films for food packaging, optical sheets, fibers for clothing, and tire cords. Among these, PET bottles are preferably used as the aforementioned PET products. This is because PET bottles are readily available in large quantities and are easy to process.

The aforementioned PET products are not particularly limited but are preferably crushed (turned into flakes) prior to the process of depolymerization into monomers, BHET, and the like.

In the normal PET production process, polyethylene terephthalate (PET) fiber can be obtained by subjecting TPA or DMT to melt polymerization with MEG, and then further subjecting polyethylene terephthalate (PET) resin obtained via BHET to solid-phase polymerization and spinning.

In the present disclosure, BHET obtained by depolymerizing PET products is used directly as a raw material, thereby providing environmental and economic advantages as compared to the case of depolymerizing to the point of monomers such as TPA and DMT.

In the chemically-recycled PET fiber of the present disclosure, the raw material contains at least one of a monomer and an intermediate that are obtained by depolymerization of a PET product, the monomer including terephthalic acid (TPA) and/or dimethyl terephthalate (DMT) and the intermediate including bis(2-hydroxyethyl) terephthalate (BHET).

Here, polyethylene terephthalate (PET) usually has the structure illustrated below.

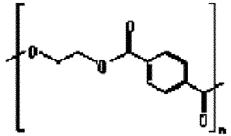

When PET is produced from BHET obtained by chemical recycling, impurities such as isophthalic acid (IPA) and diethylene glycol (DEG), for example, will be randomly included, as illustrated in Formula (3) below. These impurities were contained in the original PET product to be recycled and can be removed to some extent by purification before polymerization in the case of chemical recycling, but the impurities are unavoidable.

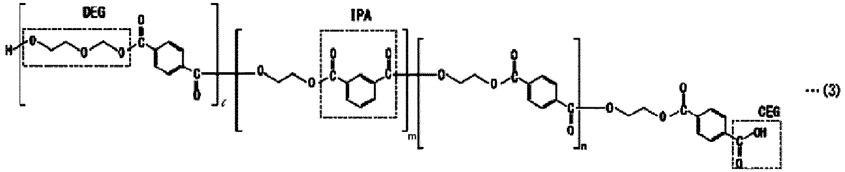

In a case in which intermediates such as BHET obtained by chemical recycling are not only pure (impurity-free) BHET oligomers as illustrated in Formula (4), but also contain components such as those illustrated in Formulas (5) and (6) in the BHET oligomers, then it is extremely difficult to purify the intermediates by distillation or other such processes and remove the components constituting impurities. As a result, polymerization of intermediates such as BHET containing these impurities is problematic, as the impurities inhibit the crystallization of PET and easily cause degradation of PET fibers.

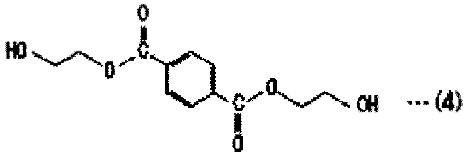

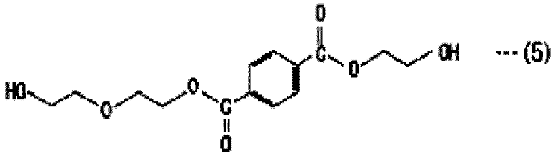

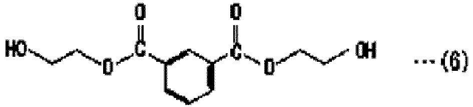

Therefore, in the present disclosure, the carboxyl end group (CEG) concentration is controlled to be 15 eq/ton or less, and the degree of crystallinity is controlled to be 40% or more for chemically-recycled PET fiber obtained by polymerization of a raw material containing at least one of a monomer such as terephthalic acid (TPA) or dimethyl terephthalate (DMT) and an intermediate such as bis(2-hydroxyethyl) terephthalate (BHET) (including BHET oligomers), thereby suppressing degradation even though impurities are contained. Consequently, strength and durability can be improved.

A hydrolysis method can be used for the depolymerization method to obtain the aforementioned TPA. A methanolysis method can be used for the depolymerization method to obtain the aforementioned DMT.

The aforementioned BHET and other intermediates include not only completely decomposed pure BHET, but also oligomers of BHET that partially contain impurity components such as those illustrated in Formulas (5) and (6).

Here, a glycolysis method is used for decomposition to intermediates such as the aforementioned BHET. When this method is used, the recycling process can be shortened and the cost for recycling can be reduced as compared to the case of depolymerizing to monomers such as TPA or DMT.

For intermediates such as BHET obtained by depolymerization of the aforementioned PET products, residual components such as polymerization catalysts and dyes are preferably not included. These residual components may adversely affect the degradation of the obtained chemically-recycled PET fiber, and a large amount of residual polymerization catalysts may make it difficult to control the polymerization reaction during re-polymerization. Hence, removing these residual components from intermediates such as BHET can reliably improve the strength and durability of the chemically-recycled PET fiber.

The chemically-recycled PET fiber of the present disclosure has a degree of crystallinity of 40% or more from the perspective that strength and durability can be further improved. The reason is that if the degree of crystallinity of the aforementioned chemically-recycled PET fiber is 40% or more, then even if IPA, DEG, or the like has the above-described effect of inhibiting crystallization, it is considered possible to keep the degradation reaction, which would be caused by the penetration of water, amines, and the like into amorphous regions, down to a level that is not problematic for product use. From the same perspective, the degree of crystallinity of the aforementioned chemically-recycled PET fiber is preferably 45% or more.

The degree of crystallinity (Xc) is calculated from the following equation by measuring the fiber density (ρ) with a density gradient tube and using the numerical values of the crystalline density of PET, ρc = 1.455 g/cm³ (Polymer, 1, 330-339 (1960)) and amorphous density, ρₐ = 1.335 g/cm³ (Proc. Roy. Soc., A226, 531-542 (1954)).

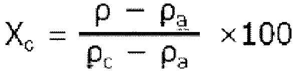

The chemically-recycled PET fiber of the present disclosure has a carboxyl end group (CEG) concentration of 15 eq/ton or less from the perspective of suppressing degradation of the PET fiber. This is because in a case in which the CEG of the chemically-recycled PET fiber is 15 eq/ton or less, the promotion of degradation by carboxyl end groups is minimized, and degradation can be suppressed.

Furthermore, the carboxyl end group (CEG) concentration in the resulting chemically-recycled PET fiber is preferably 10 eq/ton or less.

The CEG in the aforementioned chemically-recycled PET fiber can be measured by the titration method described in Analytic. Chem., 26, 1614 (1954).

Furthermore, from the perspective of suppressing degradation of the PET fiber, the obtained chemically-recycled PET fiber preferably has a diethylene glycol (DEG) content of 1.0% or less by weight and more preferably 0.5% or less by weight.

The content of DEG in the aforementioned chemically-recycled PET fiber can be determined by GC measurement after decomposition with hydrazine according to the method described in J. Polym. Sci., Part A-1, 8, 679-682 (1970).

Polymerization of raw materials obtained by the aforementioned depolymerization of PET products is performed by melt polymerization followed by solid-phase polymerization. The detailed polymerization conditions (catalyst, reaction temperature, time of polymerization, and other conditions) are not particularly limited and can be selected appropriately according to the application and required performance of the chemically-recycled PET fiber.

The chemically-recycled PET fiber of the present disclosure is PET resin, obtained through the aforementioned polymerization, made into fibrous form. The conditions on the fiber are not particularly limited and can be selected appropriately according to the application and required performance of the chemically-recycled PET fiber.

Furthermore, the chemically-recycled PET fiber of the present disclosure preferably has an intrinsic viscosity of 0.9 to 1.05 dl/g. When the intrinsic viscosity of the chemically-recycled PET fiber is 0.9 dl/g or higher, the strength as PET fiber can be increased. When the intrinsic viscosity of the chemically-recycled PET fiber is 1.05 dl/g or less, problems such as deteriorated processability will not occur.

The chemically-recycled fiber of the present disclosure can further include biomass-derived PET. This can further reduce the burden on the environment. The aforementioned biomass-derived PET includes, for example, PET products made by polymerizing ethylene glycol and terephthalic acid from non-petroleum derived materials such as plants. Such biomass-derived PET can be depolymerized and then repolymerized to obtain chemically-recycled PET. Biomass-derived PET can also be melted and remolded to obtain mechanicallyrecycled PET.

The aforementioned biomass-derived PET also includes PET that has isophthalic acid or carboxyl end groups (CEG) in the manufacturing process.

### <Rubber-fiber composite>

A rubber-fiber composite of the present disclosure is made using the above-described chemically-recycled PET fiber of the present disclosure.

By use of the chemically-recycled PET fiber of the present disclosure, excellent strength and durability can be achieved even in a rubber-fiber composite made using recycled material.

It suffices for the rubber-fiber composite of the present disclosure to contain the aforementioned chemically-recycled PET fiber, and the rubber-fiber composite can be used after mixing with other organic fibers. Other conditions on the chemically-recycled PET fiber can be selected appropriately according to the required performance.

### <Tire>

A tire of the present disclosure is made using the above-described chemically-recycled PET fiber of the present disclosure.

By inclusion of the chemically-recycled PET fiber of the present disclosure in a member of the tire, excellent strength and durability can be achieved even in the case of including tire cords made using recycled material.

In the case of use in a tire, the aforementioned rubber-fiber composite is suitably used as the carcass or the belt reinforcement layer of a pneumatic tire, but the rubber-fiber composite is not limited to such uses and can also be suitably used in a member for reinforcing the side of the tire or in other members.

### <Conveyor belt, hose>

A conveyor belt of the present disclosure is made using the above-described chemically-recycled PET fiber of the present disclosure.

In addition, a hose of the present disclosure is made using the above-described chemically-recycled PET fiber of the present disclosure.

By use of the chemically-recycled PET fiber of the present disclosure in these products, excellent strength and durability can be achieved even in products made using recycled material.

The configuration of the aforementioned chemically-recycled PET fiber is the same as the configuration described above for the chemically-recycled PET fiber of the present disclosure.

### INDUSTRIAL APPLICABILITY

According to the present disclosure, a chemically-recycled PET fiber with reduced degradation and excellent strength and durability can be provided. A rubber-fiber composite, a conveyor belt, a hose, and a tire with excellent strength and durability can also be provided according to the present disclosure.

## Claims

1. A chemically-recycled PET fiber made by polymerizing a raw material containing at least one of a monomer and an intermediate that are obtained by depolymerization of a PET product, the monomer including terephthalic acid (TPA) and/or dimethyl terephthalate (DMT) and the intermediate including bis(2-hydroxyethyl) terephthalate (BHET), wherein
the chemically-recycled PET fiber has a carboxyl end group (CEG) concentration of 15 eq/ton or less and a degree of crystallinity of 40% or more.

2. The chemically-recycled PET fiber according to claim 1, wherein the chemically-recycled PET fiber has a diethylene glycol (DEG) content of 1.0% or less by weight.

3. The chemically-recycled PET fiber according to claim 1 or 2, wherein the chemically-recycled PET fiber has an intrinsic viscosity of 0.9 to 1.05 dl/g.

4. A rubber-fiber composite using the chemically-recycled PET fiber according to claim 1 or 2.

5. A conveyor belt using the chemically-recycled PET fiber according to claim 1 or 2.

6. A hose using the chemically-recycled PET fiber according to claim 1 or 2.

7. A tire using the chemically-recycled PET fiber according to claim 1 or 2.
